# EUROPÄISCHE PATENTSCHRIFT

(11) **EP 2 583 841 B1**
(45) Veröffentlichungstag und Bekanntmachung des Hinweises auf die Patenterteilung: **29.03.2017**
(21) Anmeldenummer: 12183259.6
(22) Anmeldetag: 06.09.2012
(51) Int. Cl.: B60C 11/12, B60C 11/24

(54) **Fahrzeugluftreifen mit Abriebindikator**
Vehicle pneumatic tyre with wear indicator
Pneu de véhicule avec indicateur d'usure

(30) Priorität: 20.10.2011 DE 102011054662
(43) Veröffentlichungstag der Anmeldung: 24.04.2013
(73) Patentinhaber: Continental Reifen Deutschland GmbH, 30165 Hannover (DE)
(72) Erfinder: Seng, Matthias, 30449 Hannover (DE); Diensthuber, Franz, 30559 Hannover (DE)
(74) Vertreter: Finger, Karsten

(56) Entgegenhaltungen:
- EP-A1- 1 574 363
- EP-A1- 1 630 008
- EP-A1- 2 329 967

## Beschreibung

Die Erfindung betrifft einen Fahrzeugluftreifen mit einem Laufstreifen, welcher sich aus Profilelementen zusammensetzt, wobei zumindest ein Profilelement mit wenigstens zwei Einschnitten versehen ist, welche sich in radialer Richtung von der Laufstreifenperipherie ins Profilelementinnere erstrecken, wobei der zweite Einschnitt technisch wirksam ausgebildet ist.

Ein derart ausgeführter Fahrzeugluftreifen ist hinreichend bekannt. Es ist beispielsweise bei Laufstreifenprofilen von Winterreifen üblich, Einschnitte innerhalb der erhabenen Profilelemente vorzusehen. Auch Sommerreifen weisen Einschnitte innerhalb der erhabenen Profilelemente, welche Profilblöcke oder Bänder sein können, auf. Einschnitte bei PKW-Winterreifen weisen üblicherweise eine Breite von 0,3 mm bis 0,7 mm auf, während die Einschnitte von PKW-Sommerreifen üblicherweise eine Breite von 0,6 mm bis 1,5 mm aufweisen.
Ein Einschnitt reicht in seiner Längserstreckung entweder komplett durch das Profilelemente hindurch oder eine oder beide Einschnittsenden können innerhalb des Profilelementes enden.

Die Einschnitte in Winterreifen dienen bei winterlichen Bedingungen u.a. dazu, Schnee aufzunehmen, um die Schnee/Schnee - Reibung zu erhöhen und derart eine bessere Haftung des Reifens auf winterlicher Fahrbahn zu ermöglichen. Zudem werden eine Vielzahl an Kanten zur Verfügung gestellt, die in die winterliche Fahrbahn eingreifen können.

Es gibt eine Vielzahl an bekannten Ausbildungen von Einschnitten. Am bekanntesten ist eine Ausbildung, bei der der Einschnitt in Profilaufsicht sinusförmig ausgebildet ist und in seinem Tiefenverlauf innerhalb des Profilblockes unverändert ist (2-dimensionaler Feineinschnitt).

Es sind aber auch verschiedenste Feineinschnitte bekannt, deren Ausbildung sich mit dem Tiefenverlauf innerhalb des Profilblockes ändert, z.B. bei einem in Aufsicht sinusförmigen Verlauf mit einer im Tiefenverlauf veränderlichen Amplitude (3-dimensionaler Feineinschnitt).

Es ist dabei bei wellenförmigen Einschnitten durchaus üblich, dass nur der zentrale Bereich des Einschnittes die Wellenausbildung aufweist, während die beiden an den zentralen Bereich anschließenden Einschnittbereiche als Gerade ausgeführt sein können.

Jedoch sind die Einschnitte des Standes der Technik, welche parallel zueinander innerhalb eines Profilelementes angeordnet sind, identisch gestaltet.

Weiterhin sind Abriebindikatoren bei Reifen bekannt, welche den Abriebzustand des Laufstreifens anzeigen. Diese sind meist als zusätzliche Profilelemente, welche beispielsweise in die Umfangsrillen des Laufstreifens eingesetzt sind, ausgebildet und zeigen an, wann die kritische Restprofiltiefe erreicht ist. Diese können beispielsweise durch die Verengung der Umfangsrille an dieser Stelle messbar den Wasserabtransport nach axial außen nachteilig beeinflussen.

Der Erfindung liegt die Aufgabe zu Grunde, einen Fahrzeugreifen mit Einschnitten innerhalt von Profilelementen zu schaffen, bei dem es ermöglicht ist, den Abriebzustand am Erscheinungsbild des Profils zu erkennen, ohne dass sich die Performance des Reifens messbar ändert.

Es gibt eine Vielzahl an bekannten Ausbildungen von Einschnitten. Am bekanntesten ist eine Ausbildung, bei der der Einschnitt in Profilaufsicht sinusförmig ausgebildet ist und in seinem Tiefenverlauf innerhalb des Profilblockes unverändert ist (2-dimensionaler Feineinschnitt).

Es sind aber auch verschiedenste Feineinschnitte bekannt, deren Ausbildung sich mit dem Tiefenverlauf innerhalb des Profilblockes ändert, z.B. bei einem in Aufsicht sinusförmigen Verlauf mit einer im Tiefenverlauf veränderlichen Amplitude (3-dimensionaler Feineinschnitt).

Es ist dabei bei wellenförmigen Einschnitten durchaus üblich, dass nur der zentrale Bereich des Einschnittes die Wellenausbildung aufweist, während die beiden an den zentralen Bereich anschließenden Einschnittbereiche als Gerade ausgeführt sein können.

Jedoch sind die Einschnitte des Standes der Technik, welche parallel zueinander innerhalb eines Profilelementes angeordnet sind, identisch gestaltet.

Weiterhin sind Abriebindikatoren bei Reifen bekannt, welche den Abriebzustand des Laufstreifens anzeigen. Diese sind meist als zusätzliche Profilelemente, welche beispielsweise in die Umfangsrillen des Laufstreifens eingesetzt sind, ausgebildet und zeigen an, wann die kritische Restprofiltiefe erreicht ist. Diese können beispielsweise durch die Verengung der Umfangsrille an dieser Stelle messbar den Wasserabtransport nach axial außen nachteilig beeinflussen.

Es sind auch Fahrzeugluftreifen mit einem Profilelement aufweisend einen Einschnitt als Abriebindikator bekannt. Die Geometrie des Einschnittes verändert sich dabei in radialer Richtung. Die Profilelemente können weitere Einschnitte aufweisen. Ein Zusammenhang mit dem Indikatoreinschnitt wird aber nicht hergestellt.

Gelöst wird die gestellte Aufgabe erfindungsgemäß dadurch, dass einer dieser zwei Einschnitte ein Abriebindikator ist, welcher bei (ab) Erreichen der kritischen Restprofiltiefe in Aufsicht auf das Profilelement eine für das menschliche Auge deutlich sichtbare andere Geometrie als der zweite Einschnitt aufweist.

Es ist auf einfache Art ermöglicht, durch Aufsicht auf das Laufstreifenprofil zu erkennen, ob der Reifen bereits so weit abgefahren ist, dass dieser die kritische Restprofiltiefe erreicht hat. Dieses ist dann der Fall, wenn die Einschnitte eines Profilelementes nicht mehr die gleiche Ausbildung, sondern eine deutlich unterschiedliche Ausbildung aufweisen. Es ist kein gesonderter Abriebindikator notwendig, der zusätzlich als Profilelement in das Laufstreifenprofil eingebracht werden muss. Bei dem erfindungsgemäßen Fahrzeugreifen ändert sich die Performance des Reifens durch die Ausbildung eines Einschnittes als Abriebindikator nicht messbar. Denn bis zum Erreichen der kritischen Restprofiltiefe ist der Indikatoreinschnitt gleich dem technisch wirksamen Einschnitt ausgebildet und entfaltet im Fahrbetrieb die gleiche technische Wirkung. Erst bei Erreichen der kritischen Restprofiltiefe ändert der als Indikator dienende Einschnitt abrupt seine Geometrie.

In einer Ausführung der Erfindung sind die zwei Einschnitte vor Erreichen der kritischen Restprofiltiefe in Aufsicht auf das Profilelement wellen- oder zickzackförmig ausgebildet, während bei und nach Erreichen der kritischen Restprofiltiefe der als Abriebindikator dienende Einschnitt als Gerade und der andere Einschnitt weiterhin wellen- oder zickzackförmig ausgebildet ist. Diese Ausführung eignet sich gut für Winterreifen.

In einer alternativen Ausführung der Erfindung sind die zwei Einschnitte vor Erreichen der kritischen Restprofiltiefe in Aufsicht auf das Profilelement als Gerade ausgebildet, während bei und nach Erreichen der kritischen Restprofiltiefe der als Abriebindikator dienende Einschnitt wellen- oder zickzackförmig und der andere

In der EP 1 574 363 A1 gibt der Abriebindikator an, wenn zur optimalen Nutzung des Reifens die Position des Reifens am Fahrzeug gewechselt (rotiert) werden soll. Zusätzlich weist der Fahrzeugluftreifen einen Abriebindikator für die kritische Restprofiltiefe auf. Dieser ist innerhalb einer Profilrille angebracht.

Die EP 2 329 967 A1 und die EP 1 630 008 A1 offenbaren einen Einschnitt als Abriebindikator für die kritische Restprofiltiefe. Allein aus der Geometrie des Indikatoreinschnittes ist visuell ersichtlich, ob die kritische Restprofiltiefe erreicht ist. Hierzu weist der Indikatoreinschnitt bei Erreichen der kritischen Restprofiltiefe beispielsweise die Geometrie eines Warnsymbols oder eines Verbotssymbols auf.

Der Erfindung liegt die Aufgabe zu Grunde, einen Fahrzeugreifen mit Einschnitten innerhalt von Profilelementen zu schaffen, bei dem es ermöglicht ist, den Abriebzustand am Erscheinungsbild des Profils zu erkennen, ohne dass sich die Performance des Reifens messbar ändert.

Gelöst wird die gestellte Aufgabe erfindungsgemäß dadurch, dass der erste Einschnitt ein Abriebindikator ist, welcher bis zum Erreichen der kritischen Restprofiltiefe gleich dem zweiten Einschnitt ausgebildet ist und welcher bei Erreichen der kritischen Restprofiltiefe in Aufsicht auf das Profilelement eine für das menschliche Auge deutlich sichtbare andere Geometrie als der zweite Einschnitt aufweist.

Es ist auf einfache Art ermöglicht, durch Aufsicht auf das Laufstreifenprofil zu erkennen, ob der Reifen bereits so weit abgefahren ist, dass dieser die kritische Restprofiltiefe erreicht hat. Dieses ist dann der Fall, wenn die Einschnitte eines Profilelementes nicht mehr die gleiche Ausbildung, sondern eine deutlich unterschiedliche Ausbildung aufweisen. Es ist kein gesonderter Abriebindikator notwendig, der zusätzlich als Profilelement in das Laufstreifenprofil eingebracht werden muss. Bei dem erfindungsgemäßen Fahrzeugreifen ändert sich die Performance des Reifens durch die Ausbildung eines Einschnittes als

Einschnitt weiterhin als Gerade ausgebildet ist. Diese Ausführung eignet sich gut für Sommerreifen.

Es ist vorteilhaft, wenn der als Abriebindikator dienende Einschnitt in etwa zentral im Profilelement in Bezug auf die Anordnung der Einschnitte dieses Profilelementes in Umfangsrichtung, angeordnet ist.

Der Fahrzeugluftreifen ist ein PKW-, VAN- oder LKW-Reifen.

Weitere Merkmale, Vorteile und Einzelheiten der Erfindung werden nun anhand der Zeichnungen, die ein schematisches Ausführungsbeispiel darstellen, näher beschrieben. Dabei zeigen die
Fig. 1 eine Aufsicht auf einen Profilblock in zwei unterschiedlich angefahrenen Zuständen;
Fig. 2 einen Längsschnitt durch den Profilblock der oberen Abbildung der Fig. 1 im Bereich des Abriebindikators.

Die Erfindung befasst sich mit einer besonderen Ausführung von Einschnitten in Profilelementen von Laufstreifen, wie Profilblöcke oder Profilrippen, in Fahrzeugluftreifen, insbesondere Winterreifen für Personenkraftwagen, wobei ein Einschnitt als Abriebindikator ausgebildet ist. Ein Abriebindikator zeigt an, wann der der Fahrzeugreifen derart stark abgefahren ist, dass die kritische Restprofiltiefe erreicht ist.

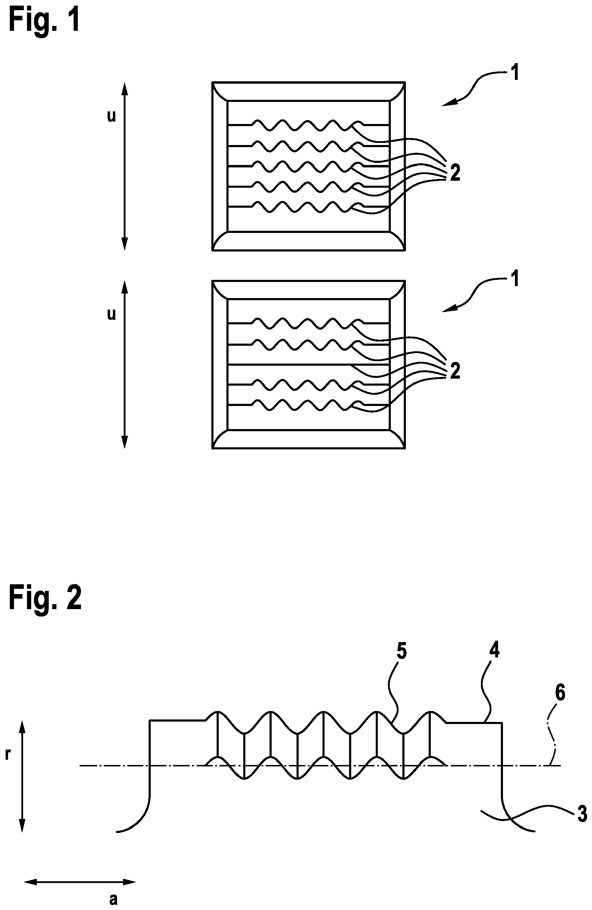

Die Fig. 1 zeigt beispielhaft ein Profilelement für einen Laufstreifen eines Winterreifens in der Form eines Profilblockes 1 mit fünf wellenförmigen Abriebindikator nicht messbar. Denn bis zum Erreichen der kritischen Restprofiltiefe ist der Indikatoreinschnitt gleich dem technisch wirksamen Einschnitt ausgebildet und entfaltet im Fahrbetrieb die gleiche technische Wirkung. Erst bei Erreichen der kritischen Restprofiltiefe ändert der als Indikator dienende Einschnitt abrupt seine Geometrie.

In einer Ausführung der Erfindung sind die zwei Einschnitte vor Erreichen der kritischen Restprofiltiefe in Aufsicht auf das Profilelement wellen- oder zickzackförmig ausgebildet, während bei und nach Erreichen der kritischen Restprofiltiefe der als Abriebindikator dienende Einschnitt als Gerade und der andere Einschnitt weiterhin wellen- oder zickzackförmig ausgebildet ist. Diese Ausführung eignet sich gut für Winterreifen.

In einer alternativen Ausführung der Erfindung sind die zwei Einschnitte vor Erreichen der kritischen Restprofiltiefe in Aufsicht auf das Profilelement als Gerade ausgebildet, während bei und nach Erreichen der kritischen Restprofiltiefe der als Abriebindikator dienende Einschnitt wellen- oder zickzackförmig und der andere Feineinschnitten 2. In der oberen Abbildung der Fig. 1 weist der Laufstreifen und somit der Profilblock leine ausreichende, unkritische Profiltiefe auf. In der unteren Abbildung der Fig. 1 hat der Laufstreifen bereits die kritische Restprofiltiefe erreicht.

Der Profilblock 1 des Laufstreifens ist mit fünf wellenförmigen Feineinschnitten 2 versehen, welche sich in radialer Richtung (in die Blattebene hinein) von der Laufstreifenperipherie 4 ins Profilelementinnere 3 erstrecken. Der in Bezug auf die Umfangsrichtung (Pfeil) zentrale Einschnitt 2 ist als Abriebindikator 5 ausgebildet. Dieser Abriebindikator 5 weist ab Erreichen der kritischen Restprofiltiefe in Aufsicht auf den Profilblock 1 eine für das menschliche Auge deutlich sichtbare andere Geometrie als die übrigen Feineinschnitte 2 auf, siehe untere Abbildung der Figur 1. Während die Feineinschnitte 2 auch bei Erreichen der kritischen Restprofiltiefe weiterhin wellenförmig ausgebildet sind, ist der als Abriebindikator 5 ausgebildete Einschnitt 2 als Gerade ausgebildet und unterscheidet sich hierdurch optisch deutlich von den übrigen Einschnitten dieses Profilblockes 2 und zeigt dem Betrachter an, dass das Laufstreifenprofil kritisch weit abgefahren ist.

Die Fig. 2 zeigt einen Längsschnitt durch den Profilblock 1 der oberen Abbildung der Fig. 1 im Bereich des Einschnittes 2, welcher als Abriebindikator 5 ausgebildet ist. Hier ist die in der Peripherie 4 liegende Oberfläche des Einschnittes 2 sowie die Kontur ab Erreichen der kritischen Restprofiltiefe 6 aus darstellungstechnischen Gründen gewellt dargestellt; in Realität ist die Oberfläche des Profilblockes 1 eben ausgebildet. Die Wellenausbildung des Einschnittes 2 liegt in Realität in der Ebene der Straßen-Kontaktfläche des Profilblockes 1, die Amplituden der Welle verlaufen in Realität senkrecht zur Blattebene.
Der Abriebindikator 5 ist derart ausgebildet, dass dieser im radial äußeren Bereich des Profilblockes 1 bis zum Erreichen der kritischen Restprofiltiefe 6 gewellt ausgebildet ist und ab Erreichen der kritischen Restprofiltiefe 6 abrupt als Gerade ausgebildet ist.

### Bezugszeichenliste

- 1.........: Profilblock
- 2.........: Feineinschnitt
- 3.........: Profilblockinneres
- 4.........: Profilblockperipherie
- 5.........: Abriebindikator
- 6.........: kritische Restprofiltiefe

- r.........: Radiale Richtung
- u.........: Umfangsrichtung
- a.........: axiale Richtung

## Patentansprüche

1. Fahrzeugluftreifen mit einem Laufstreifen, welcher sich aus Profilelementen (1) zusammensetzt, wobei zumindest ein Profilelement (1) mit wenigstens zwei Einschnitten (2) versehen ist, welche sich in radialer Richtung (r) von der Laufstreifenperipherie (4) ins Profilelementinnere (3) erstrecken, wobei der zweite Einschnitt (2) technisch wirksam ausgebildet ist,
**dadurch gekennzeichnet,**
**dass** der erste Einschnitt (2) ein Abriebindikator (5) ist, welcher bis zum Erreichen der kritischen Restprofiltiefe gleich dem zweiten Einschnitt (2) ausgebildet ist und welcher bei Erreichen der kritischen Restprofiltiefe (6) in Aufsicht auf das Profilelement (1) eine für das menschliche Auge deutlich sichtbare andere Geometrie als der zweite Einschnitt (2) aufweist.

2. Fahrzeugluftreifen nach Anspruch 1, **dadurch gekennzeichnet, dass** die zwei Einschnitte (2, 5) vor Erreichen der kritischen Restprofiltiefe (6) in Aufsicht auf das Profilelement (1) wellen- oder zickzackförmig ausgebildet sind, während bei und nach Erreichen der kritischen Restprofiltiefe (6) der als Abriebindikator (5) dienende Einschnitt als Gerade und der andere Einschnitt (2) weiterhin wellen- oder zickzackförmig ausbildet ist.

3. Fahrzeugluftreifen nach Anspruch 1, **dadurch gekennzeichnet, dass** die zwei Einschnitte (2, 5) vor Erreichen der kritischen Restprofiltiefe (6) in Aufsicht auf das Profilelement (1) als Gerade ausgebildet sind, während bei und nach Erreichen der kritischen Restprofiltiefe (6) der als Abriebindikator (5) dienende Einschnitt wellen- oder zickzackförmig und der andere Einschnitt (2) weiterhin als Gerade ausbildet ist.

4. Fahrzeugluftreifen nach einem oder mehreren der vorangehenden Ansprüche, **dadurch gekennzeichnet, dass** der als Abriebindikator (5) dienende Einschnitt etwa zentral im Profilelement (1) in Bezug auf die Anordnung der Einschnitte (2) in Umfangsrichtung, angeordnet ist.

5. Fahrzeugluftreifen nach einem der vorangehenden Ansprüche, **dadurch gekennzeichnet, dass** dieser ein PKW-, VAN- oder LKW-Reifen ist.

## Claims

1. Pneumatic vehicle tyre having a tread which is made up of profile elements (1), wherein at least one profile element (1) is equipped with at least two sipes (2) which extend in a radial direction (r) from the tread periphery (4) into the profile element interior (3), wherein the second sipe (2) is of technically active form,
**characterized in that** the first sipe (2) is a wear indicator (5) which, until the critical remaining profile depth is reached, is of identical form to the second sipe (2) and which, when the critical remaining profile depth (6) is reached, has, in a plan view of the profile element (1), a geometry which differs from that of the second sipe (2) in a manner clearly visible to the human eye.

2. Pneumatic vehicle tyre according to Claim 1, **characterized in that**, before the critical remaining profile depth (6) is reached, the two sipes (2, 5) are of undulating or zigzag-shaped form in a plan view of the profile element (1), whereas, when and after the critical remaining profile depth (6) is reached, the sipe which serves as a wear indicator (5) is of straight form and the other sipe (2) remains of undulating or zigzag-shaped form.

3. Pneumatic vehicle tyre according to Claim 1, **characterized in that**, before the critical remaining profile depth (6) is reached, the two sipes (2, 5) are of straight form in a plan view of the profile element (1), whereas, when and after the critical remaining profile depth (6) is reached, the sipe which serves as a wear indicator (5) is of undulating or zigzag-shaped form and the other sipe (2) remains of straight form.

4. Pneumatic vehicle tyre according to one or more of the preceding claims, **characterized in that** the sipe which serves as a wear indicator (5) is arranged approximately centrally in the profile element (1) in relation to the arrangement of the sipes (2) in a circumferential direction.

5. Pneumatic vehicle tyre according to one of the preceding claims, **characterized in that** it is a passenger motor vehicle tyre, van tyre or heavy goods vehicle tyre.

## Revendications

1. Bandage pneumatique pour roue de véhicule présentant une bande de roulement constituée d'un assemblage d'éléments profilés (1), au moins un élément profilé (1) étant doté d'au moins deux entailles (2) qui s'étendent dans la direction radiale (r) depuis la périphérie (4) de la bande de roulement jusqu'à l'intérieur (3) de l'élément profilé, la deuxième entaille (2) ayant un effet technique,
**caractérisé en ce que**
la première entaille (2) est un indicateur (5) d'usure qui est configuré identiquement à la deuxième entaille (2) jusqu'à ce que la profondeur critique résiduelle du profilé soit atteinte, et qui, lorsque la profondeur critique (6) du profilé est atteinte, présente lors de l'observation de l'élément profilé (1) une géométrie visible nettement différente pour l'oeil humain que celle de la deuxième entaille (2).

2. Bandage pneumatique pour roue de véhicule selon la revendication 1, **caractérisé en ce que** lors d'une observation de l'élément profilé (1) les deux entailles (2, 5) présentent la forme d'une ondulation ou d'un zigzag avant que la profondeur critique résiduelle (6) du profilé soit atteinte, tandis que lorsque et après que la profondeur critique résiduelle (6) du profilé a été atteinte, l'entaille qui sert d'indicateur d'usure (5) présente la forme d'une droite et l'autre entaille (2) présente toujours la forme d'une ondulation ou d'un zigzag.

3. Bandage pneumatique pour roue de véhicule selon la revendication 1, **caractérisé en ce que** lors d'une observation de l'élément profilé (1) les deux entailles (2, 5) sont configurées en ligne droite avant que la profondeur critique résiduelle (6) du profilé soit atteinte, tandis que lorsque et après que la profondeur critique résiduelle (6) du profilé a été atteinte, l'entaille qui sert d'indicateur d'usure (5) présente la forme d'une ondulation ou d'un zigzag et l'autre entaille (2) présente toujours la forme d'une droite.

4. Bandage pneumatique pour roue de véhicule selon l'une ou plusieurs des revendications précédentes, **caractérisé en ce que** l'entaille qui sert d'indicateur d'usure (5) est disposée sensiblement au centre de l'élément profilé (1) par rapport à l'agencement des entailles (2) dans la direction périphérique.

5. Bandage pneumatique pour roue de véhicule selon l'une ou plusieurs des revendications précédentes, **caractérisé en ce qu'**il s'agit d'un bandage pour roue de voiture personnelle, de camionnette ou de camion.
